(19) **Europäisches Patentamt European Patent Office Office européen des brevets**

(11) **EP 4 090 946 B1**

(12) **FASCICULE DE BREVET EUROPEEN**

(45) Date de publication et mention de la délivrance du brevet:
**10.09.2025 Bulletin 2025/37**

(21) Numéro de dépôt: **21704598.8**

(22) Date de dépôt: **13.01.2021**

(51) Classification Internationale des Brevets (IPC):
**G01N 21/31** (2006.01)    **G01N 1/28** (2006.01)
**H01J 49/04** (2006.01)

(52) Classification Coopérative des Brevets (CPC):
**G01N 21/31; G01N 1/28;** H01J 49/0418

(86) Numéro de dépôt international:
**PCT/FR2021/000002**

(87) Numéro de publication internationale:
**WO 2021/144518 (22.07.2021 Gazette 2021/29)**

(54) **PROCÉDÉ DE DÉTERMINATION DE L'INTÉGRITÉ D'UN DÉPÔT D'UN COMPLEXE À BASE D'UN ÉCHANTILLON BIOLOGIQUE ET SYSTÈME PERMETTANT LA MISE EN OEUVRE DUDIT PROCÉDÉ**

VERFAHREN ZUR BESTIMMUNG DER INTEGRITÄT EINER ABLAGERUNG EINES KOMPLEXES BASIEREND AUF EINER BIOLOGISCHEN PROBE UND SYSTEM ZUR DURCHFÜHRUNG DES VERFAHRENS

METHOD FOR DETERMINING THE INTEGRITY OF A DEPOSIT OF A COMPLEX BASED ON A BIOLOGICAL SAMPLE AND SYSTEM FOR CARRYING OUT SAID METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.01.2020 FR 2000282**

(43) Date de publication de la demande:
**23.11.2022 Bulletin 2022/47**

(73) Titulaire: **BIOMÉRIEUX**
**69280 Marcy L'Etoile (FR)**

(72) Inventeurs:
• **LEROUX, Denis**
  **01600 Trevoux (FR)**
• **CHARRIER, Jean-Philippe**
  **69160 Tassin La Demi Lune (FR)**
• **MONTVERNAY, Régis**
  **69004 Lyon (FR)**
• **WANDELS, Philippe**
  **69003 Lyon (FR)**

(74) Mandataire: **bioMérieux PI Groupement mandataires**
**bioMérieux**
**69280 Marcy l'Etoile (FR)**

(56) Documents cités:
**WO-A2-2006/116166     US-A1- 2013 302 847
US-A1- 2016 314 954**

**Description**

La présente invention concerne le domaine de la microbiologie et en particulier la caractérisation de microorganismes issus d'un échantillon en utilisant la spectrométrie de masse. Plus particulièrement, l'invention porte sur un système d'analyse et un procédé de détermination de l'intégrité des complexes à base d'échantillons destinés à une analyse par spectrométrie de masse de type SELDI-TOF (en anglais Surface Enhanced Laser Desorption Ionisation - Time of Flight) ou MALDI-TOF (en anglais Matrix Assisted Laser Desorption Ionisation - Time of Flight).

Dans la présente invention, on entend par « complexe » la combinaison d'au moins un microorganisme présent dans un échantillon biologique prélevé et d'au moins une matrice, le microorganisme pouvant être une bactérie, un virus, une levure, une moisissure, un champignon, etc. et la matrice pouvant être de l'acide alpha-cyano-4-hydroxycinnamique (HCCA), de l'acide 3,5-diméthoxy-4-hydroxycinnamique (ou acide sinapinique, SA), de l'acide 2,5-dihydroxybenzoïque (DHB), de la β-carboline (9H-pyrido[3,4-b]indole) (ou Norharmane), ou toute autre substance connue pour ioniser le complexe lors d'une analyse MALDI-TOF. Dans le cas particulier des microorganismes qui sont des levures, le complexe comprend en outre de l'acide formique.

Le dépôt de complexe sur un support à analyser par un spectromètre de masse c'est-à-dire le dépôt d'un échantillon suivi d'un dépôt de matrice, est actuellement réalisé manuellement. On constate des inconsistances au niveau de ce dépôt d'ordre qualitatif.

En effet, le complexe est parfois incomplet du fait de l'absence du dépôt d'un échantillon ou bien de la matrice voire des deux composants et rend le spectre de masse inexploitable, la méthode de dépôt étant réalisée souvent manuellement et de manière non standardisée.

Ce constat est assez alarmant et des solutions existent pour palier à l'absence totale de complexe telle que la solution proposée par le document US 7,145,135 B1, qui décrit un système de contrôle automatisé de la zone de réception des complexes pour un spectromètre de masse à source d'ionisation de type MALDI. Le système décrit dans le document US 7,145,135 B1 est un système à débit automatisé configuré pour identifier l'emplacement optimal pour l'impact laser afin d'ioniser le complexe déposé sur un support de type plaque MALDI, la détection de la présence d'un complexe est donc obligatoire afin de déterminer où positionner le laser, d'autant plus que les zones de réception sont très rapprochées et donc difficilement dissociables.

US2013/302847 A1 concerne une méthode d'aide au dépôt manuel d'échantillons et une méthode de détermination du dépôt d'un site d'échantillon sur un support d'échantillon pour l'ionisation par désorption laser assistée par matrice.

A ce jour, aucune solution ne permet de détecter plus finement le niveau de complétude du complexe ni d'alerter le technicien à temps afin de corriger ou à tout le moins d'identifier les zones de réception qui présentent une défaillance du fait de l'absence d'un ou des composants du complexe, ce qui engendre des résultats faussés et donc peut conduire à un mauvais diagnostique.

L'invention a pour but de remédier à tout ou partie des inconvénients précités et notamment à réaliser un contrôle de la qualité et donc de l'intégrité de chaque complexe déposé sur un support tel qu'une plaque MALDI-TOF comprenant une pluralité de zones de réception dans lesquelles un dépôt de complexe est effectué.

À cet effet, l'invention, telle que définir dans la revendication 1 annexée, a pour objet un procédé de détermination de l'intégrité d'au moins un complexe à base d'au moins un échantillon biologique et d'au moins une matrice, ledit complexe étant agencé dans au moins une zone de réception d'un support destinée à être analysée ultérieurement, ledit procédé étant mis en œuvre par un système de détermination comprenant au moins un imageur, une unité d'analyse configurée pour coopérer avec l'imageur caractérisé en ce que ledit procédé comprend au moins les étapes suivantes :

- acquisition d'au moins une image d'au moins une zone de réception du support, l'acquisition étant réalisée par l'imageur du système de détermination,
- envoi de l'au moins une image acquise par l'imageur vers l'unité d'analyse,
- analyse de l'image envoyée en extrayant des valeurs d'intensité lumineuse représentatives d'au moins une bande spectrale, l'analyse étant réalisée par l'unité d'analyse,
- mise en relation des valeurs d'intensité lumineuse entre elles pour obtenir des données spectrales représentatives, et obtention desdites données spectrales représentatives,
- détermination par l'unité d'analyse d'un état d'intégrité du complexe par la comparaison par regroupement de similarité avec un seuil de similarité déterminé de chacune des données spectrales représentatives obtenues à l'étape de « mise en relation » avec des données spectrales de référence contenues dans l'unité d'analyse (30) et identifiées pour chaque état d'intégrité parmi au moins :

　　(i) un premier état d'intégrité correspondant à la présence d'un dépôt d'échantillon combiné à l'absence de dépôt de matrice,
　　(ii) un deuxième état d'intégrité correspondant à la présence d'un dépôt de matrice combiné à l'absence de dépôt d'échantillon,
(iii) un troisième état d'intégrité correspondant à la présence d'un dépôt d'échantillon combiné à la présence d'un dépôt de matrice,

- déclenchement d'au moins une première alerte, par l'unité d'analyse, lorsque les données représentatives s'apparentent au premier état d'intégrité ou au deuxième état d'intégrité.

Grâce à un tel procédé, il est aisé d'identifier les zones de réception dans lesquelles il y a un complexe incomplet, de compléter le complexe si cela est encore possible ou du moins isoler ces zones de réception afin de ne pas en tenir compte pour la suite de l'analyse.

Dans la présente invention, on entend par « intégrité du complexe », le niveau de complétude du complexe ; un complexe qui est complet/intègre présente au moins un dépôt d'échantillon biologique et au moins un dépôt d'un fluide appelé matrice.

Selon une caractéristique d'un mode de réalisation de l'invention, en étape d'acquisition, l'imageur acquiert une pluralité d'images d'au moins la zone de réception du support, l'acquisition des images étant réalisée à des instants déterminés différents ou sur au moins une période de temps déterminée. L'acquisition d'une pluralité d'images permet une identification plus fine après les étapes de dépôt de chaque composant du complexe. Cette acquisition est d'autant plus avantageuse quand cette dernière est réalisée sur une période de temps c'est-à-dire en cinétique, ce qui permet de capturer les variations d'états et de compléter les dépôts en temps réel lorsque ces derniers sont omis.

Selon une caractéristique d'un mode de réalisation de l'invention, l'imageur est un imageur RGB ou un imageur multi-spectral ou un imageur hyperspectral. L'imageur peut être de différente sorte, l'avantage d'un imageur RGB est que les canaux spectraux sont déjà déterminés et ce type d'imageur est peu coûteux. L'intérêt d'un imageur multi-spectral ou hyperspectral est que les canaux « sélectionnés » peuvent être différents des canaux RGB et peuvent être également plus nombreux, sachant que plus on sélectionne de canaux, plus le taux de performance de la classification est élevé.

Selon une caractéristique d'un mode de réalisation de l'invention, la liste comprenant les états d'intégrité comprend au moins un quatrième état d'intégrité correspondant à l'absence de complexe c'est-à-dire à l'absence de dépôt d'échantillon combiné à l'absence de dépôt de matrice. Cette fonctionnalité permet de distinguer une zone de réception vide d'une zone de réception avec un dépôt quel qu'il soit, ce qui permet d'écarter la zone de réception vide lors de l'analyse des résultats ou bien de remplir cette zone.

Selon une caractéristique d'un mode de réalisation de l'invention, l'acquisition d'au moins une image est réalisée par déclenchement manuel ou automatique. Ainsi, un déclenchement manuel permet de contrôler la prise d'image et de s'assurer que l'acquisition de l'image est bien réalisée au temps déterminé. Un déclenchement automatique est calibré dans le temps, ce qui permet d'automatiser la prise d'image, simplifiant et réduisant le nombre de manipulation pour l'opérateur. En particulier, selon une caractéristique de l'invention, la fréquence d'acquisition d'au moins une image est calculée en fonction du temps nécessaire au dépôt de l'échantillon et du temps nécessaire au dépôt de la matrice.

Selon une caractéristique d'un mode de réalisation de l'invention, le déclenchement de l'acquisition d'image peut être semi-automatique. Par exemple, le déclenchement est réalisé ou initié dès l'accomplissement d'une action déterminée, par exemple le scan d'un identificateur tel qu'un code barre.

Selon une caractéristique d'un mode de réalisation de l'invention, le déclenchement de l'acquisition d'image peut être réalisé par détection d'interruption de signal lumineux ou par détection de variations au moyen d'un capteur piézoélectrique par exemple.

Selon une caractéristique d'un mode de réalisation de l'invention, le procédé comprend une étape de déclenchement d'une deuxième alerte, différente de la première alerte, la deuxième alerte étant déclenchée lorsque les données représentatives s'apparentent au troisième état d'intégrité, ce qui permet de valider les étapes du procédé de dépôt du complexe avant insertion du support dans le spectromètre de masse pour analyse.

Selon une caractéristique d'un mode de réalisation de l'invention, le déclenchement de la deuxième alerte entraine l'arrêt de l'acquisition d'image lorsque cette dernière est réalisée sur une période déterminée sauf si l'unité d'analyse a connaissance d'un autre dépôt de complexe en cours, sur le support.

En effet, il est possible de déposer plusieurs échantillons issus d'origines différentes sur un même support : plusieurs dépôts seront donc simultanément en cours. Dans ce cas, l'acquisition d'images continue tant que l'ensemble des dépôts ne sont pas terminés ou considérés comme terminés par l'unité d'analyse.

Alternativement, le déclenchement de la deuxième alerte entraine l'acquisition d'une image lorsque cette dernière est réalisée à des instants déterminés et en particulier à la fin du procédé de préparation du support.

Selon une caractéristique d'un mode de réalisation de l'invention, le procédé comprend une étape de déclenchement d'une troisième alerte, différente de la première alerte et de la deuxième alerte, la troisième alerte étant déclenchée lorsque les données représentatives s'apparentent au quatrième état d'intégrité. Cette troisième alerte permet de prévenir l'opérateur que les zones de réception du support sont vides et qu'il est possible de remédier à ce défaut. Avantageusement, dans le cas d'une acquisition d'image en continu, la troisième alerte n'est déclenchée que lorsque l'unité d'analyse reçoit une information de réalisation d'un dépôt de complexe alors que ladite unité d'analyse détermine le quatrième état d'intégrité.

Selon une caractéristique d'un mode de réalisation de l'invention, le procédé comprend une étape de calibration préalable à l'étape d'acquisition du procédé, l'étape de calibration consistant en l'acquisition d'une image, dite image de référence, de l'au moins une zone de réception, pour chaque état d'intégrité à référencer.

Cette étape de calibration permet l'adaptation du procédé à des conditions expérimentales différente car elle permet de définir un référentiel in situ. En outre, l'étape de calibration est notamment utilisée lors de la détermination de chaque état d'intégrité et des données spectrales de référence y relatives, qui sont implémentées dans l'unité d'analyse préalablement à la mise en œuvre du procédé de détermination selon l'invention.

Par exemple, pour le quatrième état d'intégrité, on acquiert une image de référence de la zone de réception vide. Pour le premier état d'intégrité, on acquiert une image de référence avec un dépôt de l'échantillon seul. Pour le deuxième état d'intégrité, on acquiert une image de référence avec un dépôt de matrice seul et pour le troisième état d'intégrité , on acquiert une image avec un dépôt d'échantillon complété d'un dépôt de matrice.

Lorsque la matrice est déposée dans la zone de réception, une goutte est formée à la surface de la zone de réception. Le degré de mouillage, correspondant au degré d'étalement du liquide sur ce solide, varie selon l'énergie de surface de la zone de réception. A volume constant, le diamètre projeté d'une goutte déposée sur une surface « peu mouillante », correspondant à un angle de contact élevé (énergie de surface faible) est plus faible que le diamètre projeté d'une goutte déposée sur une surface « plus mouillante », correspondant à un angle de contact bas (énergie de surface élevée).

Pour quantifier la qualité du mouillage, on mesure le diamètre projeté dans le plan de la zone de réception (les gouttes étant déposées à volume constant.

Selon une caractéristique d'un mode de réalisation de l'invention, le diamètre d'une goutte d'un complexe selon le troisième état d'intégrité est supérieur au diamètre d'une goutte d'un complexe selon le deuxième état d'intégrité. La surface de contact étant déterminée par la loi de Young, qui permet de déterminer un angle de contact à partir des énergies de surface du solide 's' (la zone de réception) et du liquide 'l' (la matrice). La mesure du diamètre est une mesure indirecte plus simple à mettre en œuvre que la mesure de l'angle de contact.

Sans être lié à l'interprétation, nous expliquons ce comportement par l'énergie de surface élevée de l'échantillon formant un film de bactéries (chargées et hydrophiliques) en comparaison des zones de réception vierge de bactéries (plus hydrophobe, matière polymère de la plaque de réception MALDI).

Selon une caractéristique d'un mode de réalisation de l'invention, le procédé de détermination comprend une étape de détermination du deuxième état d'intégrité par la mesure diamètre projeté de la goutte du complexe présent dans la zone de réception du support.

Selon une caractéristique d'un mode de réalisation de l'invention, le procédé de détermination peut comprendre une sous-étape préalable de mesure du diamètre de la goutte du complexe présent dans la zone de réception du support (en l'absence de dépôt d'échantillon, deuxième état d'intégrité (0M) et une sous-étape préalable de comparaison du diamètre mesuré avec un diamètre de référence correspondant au diamètre d'une goutte d'un complexe présentant un troisième état d'intégrité (BM), lesdites sous-étapes étant réalisées avant l'étape de détermination du deuxième état d'intégrité par mesure de l'angle de contact. En effet, il est possible de distinguer le deuxième état d'intégrité (0M) du complexe des autres états d'intégrité par mesure du diamètre projeté de la goutte de dépôt en complément ou en remplacement d'une mesure du diamètre de l'angle de contact.

Dans la présente divulgation, l'angle de contact de la goutte est mesuré par l'équation Young-Laplace suivante :

[Math 1] équation Young-Laplace :

$$cos\theta = \frac{\sigma_{Sv} - \sigma_{Sl}}{\sigma_{lv}}$$

Dans laquelle Θ est l'angle de contact entre l'air ambiant, la goutte de complexe et le support, exprimé en degrés,

$\sigma_{sv}$ représente l'énergie interfaciale entre l'air et le support, exprimée en milliNewtons/m ou en dynes/cm
$\sigma_{sl}$ représente l'énergie interfaciale entre la goutte et le support, exprimée en milliNewtons/m ou en dynes/cm,
$\sigma_{lv}$ représente l'énergie interfaciale (tension interfaciale) entre la goutte et l'air ambiant, exprimée en milliNewtons/m ou en dynes/cm.

Avantageusement, le procédé de détermination d'intégrité est utilisé dans un procédé de préparation d'un support à des fins d'analyses par exemple par spectromètre de masse, de manière à détecter la nature du/des microorganismes présents dans le ou les échantillons déposés sur le support.

L'invention, telle que définie dans la revendication 7 annexée, a également pour objet un procédé de préparation d'un support à des fins d'analyses par exemple par spectromètre de masse, de manière à détecter la nature du/des microorganismes présents dans le ou les échantillons déposés sur le support, le procédé de préparation comprenant au moins les étapes suivantes :

- dépôt d'un échantillon biologique dans au moins une zone de réception du support
- dépôt d'une matrice dans l'au moins une zone de réception du support dans laquelle le dépôt d'échantillon est réalisé,

le procédé de préparation étant caractérisé en ce qu'il intègre un procédé de détermination d'intégrité du complexe selon l'invention.

Selon une caractéristique d'un mode de réalisation de l'invention, chaque dépôt est un dépôt d'une couche d'échantillon ou de matrice.

Selon une caractéristique d'un mode de réalisation de l'invention, l'étape d'acquisition d'au moins une image du procédé de détermination est réalisée après l'étape de dépôt de matrice.

Alternativement, selon une caractéristique d'un mode de réalisation de l'invention, l'étape d'acquisition d'au moins une image du procédé de détermination est réalisée après l'étape de dépôt de d'échantillon et après l'étape de dépôt de matrice.

Alternativement, selon une caractéristique d'un mode de réalisation de l'invention, l'étape d'acquisition d'au moins une image du procédé de détermination est déclenchée avant l'étape de dépôt d'échantillon et est arrêtée après l'étape de dépôt de matrice, l'étape d'acquisition étant réalisée en continu durant les étapes du procédé de préparation.

Selon une caractéristique d'un mode de réalisation de l'invention, à chaque étape de dépôt d'échantillon ou de matrice sur la zone de réception, l'opérateur peut signifier manuellement à l'unité d'analyse une information de réalisation, l'étape d'acquisition d'au moins une image étant réalisée postérieurement à cette signification.

L'invention, telle que définie dans la revendication 11 annexée, a également pour objet un système configuré pour mettre en œuvre le procédé selon l'invention, comprenant au moins un imageur, une unité d'analyse et au moins un dispositif d'affichage configuré pour afficher la ou les alertes.

En outre, le dispositif d'affichage est configuré pour afficher une représentation graphique du support illustrant l'au moins une zone de réception du support et de préférence toutes les zones de réception du support.

Selon une caractéristique d'un mode de réalisation de l'invention, le système comprend un dispositif de guidage coopérant avec le dispositif d'affichage, le dispositif de guidage étant intégré dans l'unité d'analyse, le dispositif de guidage étant configuré pour indiquer la ou les zones de réception destinées au dépôt d'un échantillon et/ou d'un dépôt de matrice.

Selon une caractéristique d'un mode de réalisation de l'invention, le dispositif de guidage est configuré pour coopérer avec l'imageur.

Selon une caractéristique d'un mode de réalisation de l'invention, le dispositif de guidage est configuré pour indiquer via le dispositif d'affichage quelle zone de réception est à remplir ou à compléter en fonction de l'état d'avancement du procédé de préparation et du procédé de détermination d'intégrité. Ce dispositif de guidage permet de guider l'opérateur d'étape en étape avec un suivi préférentiellement en temps réel qui est notamment possible lors de l'acquisition de plusieurs images selon le procédé de détermination d'intégrité que ce soit à des temps déterminés ou sur une période déterminée. En outre, le dispositif de guidage permet de s'assurer que l'ensemble du support est prêt avant l'analyse dans le spectromètre de masse.

Selon une caractéristique d'un mode de réalisation de l'invention, la signification de l'information de réalisation d'un dépôt est réalisée via le dispositif de guidage coopérant avec l'unité d'analyse.

Avantageusement, lorsqu'un complexe est catégorisé selon le premier état d'intégrité ou le deuxième état d'intégrité, le dispositif de guidage indique à l'opérateur la zone de réception du support défaillante nécessitant une intervention via le dispositif d'affichage, l'intervention pouvant être soit la correction de l'erreur, soit l'isolation de la zone de réception en fonction des cas de figures.

Dans un premier cas, si l'étape d'acquisition du procédé de détermination d'intégrité est réalisée sur une période de temps déterminée en temps réel, alors l'opérateur peut corriger l'absence de matrice (deuxième état d'intégrité) ou identifier l'absence d'échantillon (premier état d'intégrité) et ne pas en tenir compte dans l'analyse ultérieure.

Dans un deuxième cas, si l'étape d'acquisition du procédé de détermination d'intégrité est réalisée après chaque étape de dépôt, il est aisé de corriger l'étape de dépôt manquante le cas échéant ou identifier l'absence d'échantillon (premier état d'intégrité) et ne pas en tenir compte dans l'analyse ultérieure.

Dans un troisième cas, si l'étape d'acquisition du procédé de détermination est réalisée une fois le dépôt d'échantillon et le dépôt de matrice supposés réalisés, alors, l'opérateur identifie les zones de réception défaillante et n'en tient pas compte dans l'analyse ultérieure du ou des microorganismes.

Selon une caractéristique d'un mode de réalisation de l'invention, les indications du dispositif de guidage via le dispositif d'affichage sont représentées par des indicateurs de forme géométrique déterminées et/ou des indicateurs de couleurs déterminées.

Par exemple, pour une zone de réception vide à remplir par un dépôt de matrice, la zone de réception présentera un indicateur de forme ronde verte (par exemple) sur la représentation graphique affichée sur le dispositif d'affichage de sorte que l'opérateur puisse repérer aisément la zone de réception à remplir. En outre, par exemple, si le dépôt d'échantillon est manquant ou mal fait, la zone de réception correspondante présentera un indicateur de forme ronde rouge (par exemple) indiquant la nécessité de refaire le dépôt ou d'isoler ladite zone de réception pour l'écarter des zones de réception à analyser ultérieurement.

Selon une caractéristique d'un mode de réalisation de l'invention, l'imageur comprend un canal spectral, préférentiellement au moins deux canaux spectraux. Par exemple, un premier canal spectral correspond à une première bande spectrale allant de 410 nm à 427 nm et un deuxième canal spectral correspond à une deuxième bande spectrale allant de 761 nm à 786 nm.

Selon une caractéristique d'un mode de réalisation de l'invention, l'imageur du système est configuré pour lire une image de type code-barres unidimensionnel ou bidimensionnel ou QR code.

Selon une caractéristique d'un mode de réalisation de l'invention, l'imageur du système est également configuré pour acquérir une image d'une boîte de Pétri de manière à corréler le microorganisme de l'échantillon analysé sur le support à la boîte de Pétri dont il provient.

Selon une caractéristique d'un mode de réalisation de l'invention, le support comprend une pluralité de zone de réception, par exemple quarante-huit zones de réception. Ainsi, il est possible de déposer jusqu'à quarante-huit échantillons d'origine différente.

L'invention sera mieux comprise, grâce à la description ci-après, qui se rapporte à des modes de réalisation selon la présente invention, donnés à titre d'exemples non limitatifs et expliqués avec référence aux figures schématiques annexées. Les figures schématiques annexées sont listées ci-dessous:

[Fig. 1] est une vue schématique du procédé de préparation selon un premier mode de réalisation,
[Fig. 2] est une vue schématique du procédé de préparation selon un deuxième mode de réalisation,
[Fig. 3A] est une vue schématique du procédé de préparation selon un troisième mode de réalisation,
[Fig. 3B] est une vue schématique du procédé de préparation selon une variante du troisième mode de réalisation,
[Fig. 4] est une série d'image en noir et blanc de trois supports d'échantillons selon les canaux R (PC1) G (PC2) B (PC3),
[Fig. 5] est une représentation graphique des valeurs d'intensité lumineuses des complexes de la figure 4, après une analyse en composante principale.
[Fig. 6] est une représentation graphique de valeur d'intensité lumineuse d'un complexe en fonction du temps selon une longueur d'onde,
[Fig. 7] est une photographie partielle du support illustrant des complexes déposés présentant des états d'intégrité différents,
[Fig. 8] est une vue schématique du système selon un mode de réalisation de l'invention,
[Fig. 9] est une illustration partielle du système selon le mode de réalisation de l'invention représenté en figure 8,
[Fig. 10] est une vue représentative du support d'échantillon via le dispositif d'affichage.

Dans le cadre d'un procédé de préparation d'un support d'échantillons selon l'invention à des fins d'analyses par exemple par spectromètre de masse, on utilise un support d'échantillons se présentant sous la forme d'une carte présentant une pluralité de zones de réception appelées « puits ». Dans chaque puits, on dépose généralement une goutte d'un échantillon contenant un ou plusieurs microorganisme(s) à identifier par exemple, et au moins une goutte de matrice. Dans le cas particulier d'identification d'une levure, on peut ajouter une goutte d'acide formique entre le dépôt d'échantillon et le dépôt de matrice. Le dépôt final est appelé « complexe » et comprend donc à minima une couche d'échantillon et une couche de matrice.

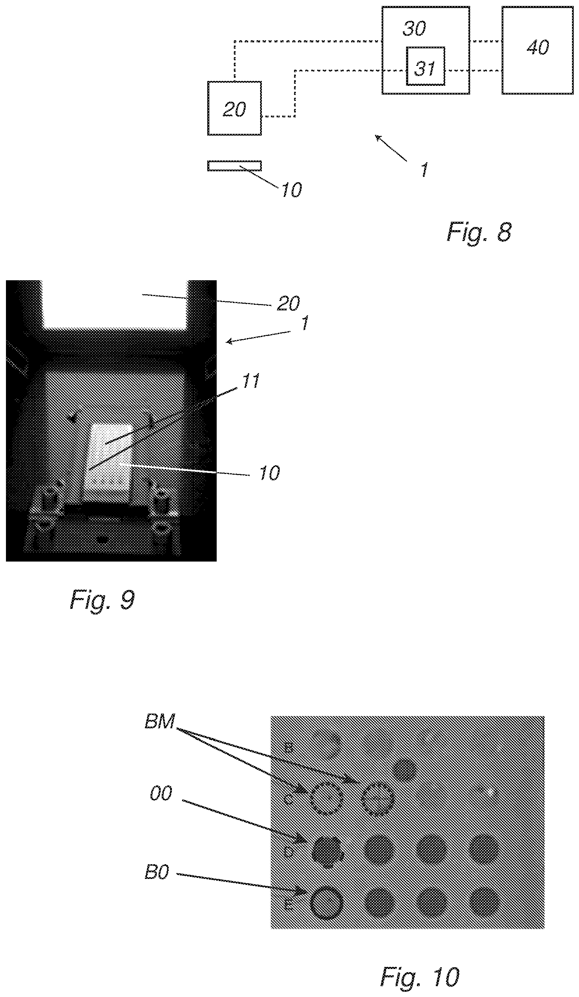

Avant de procéder à l'analyse et l'identification du ou des microorganismes dans l'échantillon, un procédé de détermination de l'intégrité du complexe est réalisé selon l'invention afin de vérifier si la préparation du support est réalisée convenablement pour éviter tous résultats inexacts. Quel que soit le mode de réalisation du procédé de préparation selon l'invention, le procédé de détermination selon un mode de réalisation de l'invention est mis en œuvre par un système 1 illustré aux figures 8 et 9.

Selon un mode de réalisation de l'invention, le système 1 comprend au moins un imageur 20, une unité d'analyse 30 et au moins un dispositif d'affichage 40 configuré pour afficher/transmettre la ou les alertes à l'opérateur. Le dispositif d'affichage 40 est configuré pour afficher une représentation graphique du support 10 illustrant l'au moins une zone de réception 11 du support 10 et de préférence toutes les zones de réception 11 du support 10.

Comme illustré en figure 8 notamment, le système 1 comprend un dispositif de guidage 31 coopérant avec le dispositif d'affichage 20 et avec le dispositif d'affichage 40, le dispositif de guidage 31 étant intégré dans l'unité d'analyse 30.

Le dispositif de guidage est configuré pour indiquer la ou les zones de réception 11 du support 10 destinées au dépôt d'un échantillon et/ou au dépôt de matrice et également alerter via le dispositif d'affichage 40 quelle zone de réception 11 est à remplir ou à compléter en fonction de l'état d'avancement du procédé de préparation et du procédé de détermination d'intégrité.

Comme on peut le voir en figure 10, le dispositif de guidage 31 permet de guider l'opérateur d'étape en étape avec un suivi préférentiellement en temps réel qui est notamment possible lors de l'acquisition de plusieurs images selon le procédé de détermination d'intégrité que ce soit à des temps déterminés ou sur une période déterminée. Comme on peut le voir en figure 8, le dispositif de guidage peut alerter l'opérateur par des indicateurs graphiques sur la représentation du support affichée sur le dispositif d'affichage 40. Dans l'exemple illustré, le dispositif de guidage 31 indique à l'opérateur que les deux zones de réception en ligne C comprennent des complexes présentant un troisième état d'intégrité (BM) par un cerclage pointillé serré, il indique également que en ligne D la première zone de réception est vide (quatrième état d'intégrité 00) et est prête à recevoir un dépôt d'échantillon (cerclage pointillé écarté) et qu'en ligne E la première zone de réception présente un complexe dont l'état d'intégrité correspond au premier état d'intégrité (B0) et est donc prête à recevoir un dépôt de matrice ou d'acide formique (cerclage continu).

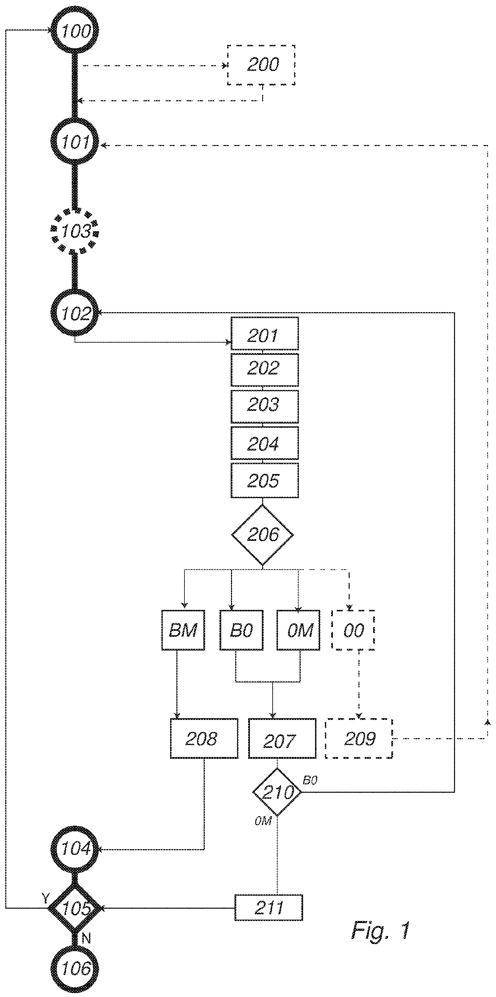

Le procédé de détermination et le procédé de préparation de support vont maintenant être décrits en référence aux figures 1 à 3B.

Dans un premier mode de réalisation illustré en figure 1, le procédé de détermination d'intégrité est réalisé après les étapes 101, 102, 103 de dépôt respectivement d'échantillon, de matrice, d'acide formique le cas échéant. Ledit procédé de détermination d'intégrité dans le premier mode de réalisation comprend une étape 201 de capture d'au moins une image du support d'échantillon et plus particulièrement d'au moins une zone de réception. L'image capturée est ensuite envoyée (étape 202) à l'unité d'analyse du système. Par la suite, l'unité d'analyse analyse l'image en extrayant des valeurs d'intensité lumineuse représentatives d'au moins une bande spectrale (étape 203) et met en relation des valeurs d'intensité lumineuse entre elles pour obtenir des données spectrales représentatives (étape 204), et obtient lesdites données spectrales représentatives (étape 205). En comparant (étape 206), chacune des données spectrales représentatives obtenues à l'étape précédente avec des données spectrales de référence, l'unité d'analyse détermine un état d'intégrité du complexe contenu dans la au moins zone de réception. Il est à noter que les données spectrales de référence sont contenues dans l'unité d'analyse et sont chacune identifiée pour un état d'intégrité parmi au moins : (i) un premier état d'intégrité (B0) correspondant à la présence d'un dépôt d'échantillon combiné à l'absence de dépôt de matrice, (ii) un deuxième état d'intégrité (0M) correspondant à la présence d'un dépôt de matrice combiné à l'absence de dépôt d'un échantillon, (iii) un troisième état d'intégrité (BM) correspondant à la présence d'un dépôt échantillon combiné à la présence d'un dépôt de matrice. Suite à la détermination de l'état d'intégrité du complexe, l'unité d'analyse envoie une alerte correspondante.

Une première alerte est envoyée à l'opérateur (étape 207) lorsque l'unité d'analyse détermine que le complexe présente un état d'intégrité correspondant au premier état d'intégrité ou au deuxième état d'intégrité. En effet, le complexe est considéré comme incomplet et l'opérateur doit en prendre connaissance. Suite à cette première alerte, une étape de différenciation (étape 210) d'état d'intégrité est réalisée pour permettre à l'opérateur de savoir si il s'agit d'une absence de dépôt de matrice ou de l'absence de dépôt d'échantillon qui est détectée. Pour cette étape de différenciation soit l'on procède à une analyse plus fine des bandes spectrales soit l'on peut également mesurer l'angle de contact de la goutte du complexe déposé sur la zone de réception.

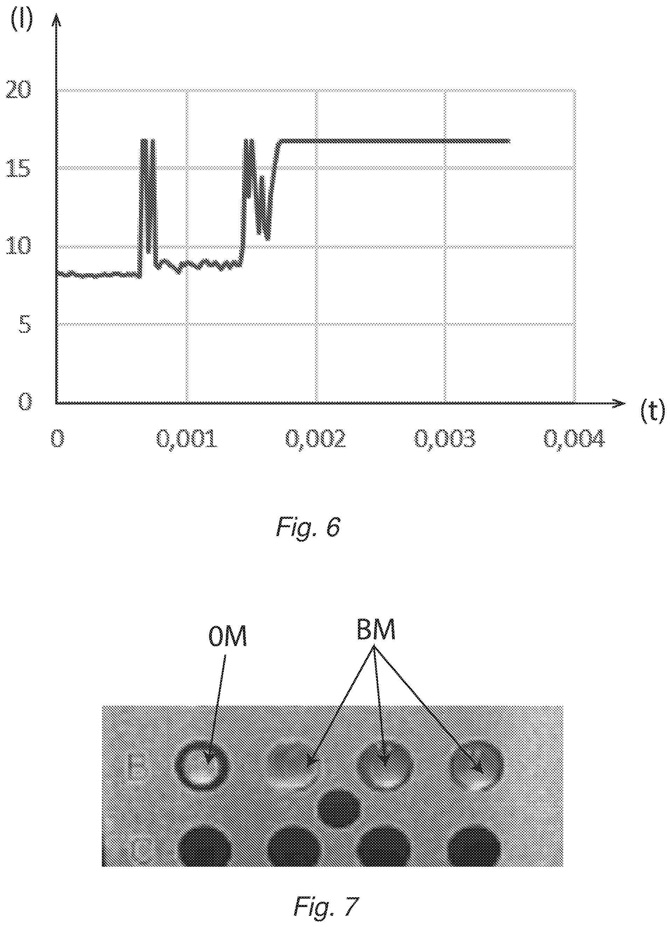

En figure 7 sont représentés des dépôts de complexes présentant des états d'intégrité différents. On voit qu'en ligne B, au niveau de la première zone de réception, un dépôt de complexe présentant un deuxième état d'intégrité (0M) et en ligne B, au niveau des trois autres zones de réception, des dépôts de complexes présentant un troisième état d'intégrité (BM). On voit bien que la goutte du complexe présentant un deuxième état d'intégrité (0M) présente un diamètre inférieur à celui des gouttes du complexe présentant un troisième état d'intégrité (BM). Il est à noter que le diamètre observé après dépôt de la matrice sur la zone de dépôt vierge est de environ 70% de la valeur nominale du diamètre observé après dépôt de la matrice sur l'échantillon formant un film bactérien.

S'il est déterminé que le dépôt de matrice est manquant (premier état d'intégrité B0), l'opérateur peut remédier à l'oubli en déposant ladite matrice en revenant à l'étape 102, le procédé de détermination sera de nouveau réalisé après pour s'assurer que l'étape 102 est bien effectuée et que le complexe est complet (étape 104).

S'il est déterminé que le dépôt d'échantillon est manquant (deuxième état d'intégrité 0M), l'opérateur identifie sur le dispositif d'affichage de l'unité d'analyse les zones de réception défectueuses et les isole (étape 211) afin de ne pas en tenir compte lors de l'analyse ultérieure. Il est à noter que l'isolation des zones défectueuses (étape 211) déclenche la suite de la procédure à savoir l'étape de décision 105 et en fonction de la décision, soit l'étape 106 de clôture du procédé de préparation du support soit l'étape 100 d'initialisation.

Une deuxième alerte est envoyée à l'opérateur (étape 208) lorsque l'unité d'analyse détermine que le complexe présente un état d'intégrité correspondant au troisième état d'intégrité. En effet, le complexe est considéré comme complet (étape 104) et l'opérateur doit en prendre connaissance pour passer à la suite du procédé.

Optionnellement, et comme illustré en pointillé, le procédé de détermination peut déterminer un quatrième état d'intégrité (00) du complexe correspondant à l'absence de dépôt d'échantillon et à l'absence de dépôt de matrice. Ce quatrième état d'intégrité (00) est signifié par une troisième alerte (étape 209) à l'opérateur. L'opérateur peut remédier à l'oubli en revenant à l'étape 101, le procédé de détermination sera de nouveau réalisé après pour s'assurer que le complexe est complet (étape 104).

Optionnellement, une étape de calibration 200 peut être réalisée avant le dépôt d'échantillon (étape 101).

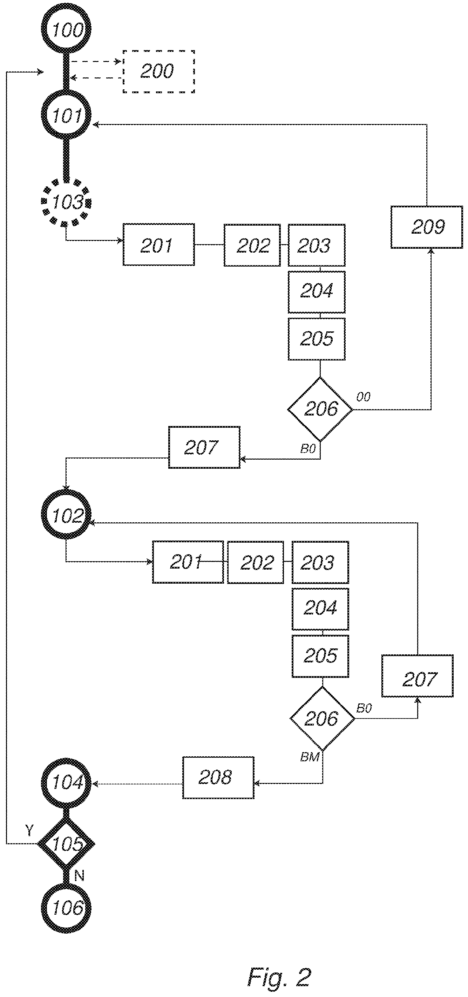

Dans un deuxième mode de réalisation illustré en figure 2, le procédé de détermination d'intégrité est déclenché et plus précisément l'étape d'acquisition 201 d'au moins une image du support et plus particulièrement d'au moins une zone de réception, après la première étape 101 de dépôt d'un échantillon ou après l'étape de dépôt d'acide formique 103 le cas échéant. L'image capturée est ensuite envoyée (étape 202) à l'unité d'analyse du système. Par la suite, l'unité d'analyse analyse l'image en extrayant des valeurs d'intensité lumineuse représentatives d'au moins une bande spectrale (étape 203) et met en relation des valeurs d'intensité lumineuse entre elles pour obtenir des données spectrales représentatives (étape 204), et obtient lesdites données spectrales représentatives (étape 205). En comparant (étape 206), chacune des données spectrales représentatives obtenues à l'étape précédente avec des données spectrales de référence, l'unité d'analyse détermine un état d'intégrité du complexe contenu dans la au moins zone de réception. Il est à noter que les données spectrales de référence sont contenues dans l'unité d'analyse et sont chacune identifiée pour un état d'intégrité parmi au moins : (i) un premier état d'intégrité (B0) correspondant à la présence d'un dépôt d'échantillon combiné à l'absence de dépôt de matrice, (ii) un quatrième état d'intégrité (00) correspondant à l'absence d'un dépôt échantillon combiné à l'absence d'un dépôt de matrice. Suite à la détermination de l'état d'intégrité du complexe, l'unité d'analyse envoie une alerte correspondante : soit une première alerte (étape 207) indiquant un premier état d'intégrité (B0) puisque seule l'étape 101 étant réalisée à ce stade, soit une troisième alerte (étape 209) indiquant un quatrième état d'intégrité (00) de manière à ce que l'étape de dépôt d'échantillon (étape 101) soit à nouveau réalisée, les étapes 101, 103, 201, 202, 203, 204, 205 et 206 sont réalisées tant que la troisième alerte (étape 209) est déclenchée. Une fois le premier état d'intégrité (B0) déterminé, la deuxième étape (102) de dépôt d'une matrice est déclenchée. Par la suite, les étapes 201, 202, 203, 204, 205 et 206 sont réalisées de manière à ce que l'unité d'analyse détermine l'état d'intégrité du complexe : soit il s'agit du premier état d'intégrité (B0) et la première alerte est déclenchée (étape 207) pour revenir à l'étape de dépôt de matrice (étape 102) et aux étapes suivantes 201, 202, 203, 204, 205 et 206, soit il s'agit du troisième état d'intégrité (BM) et une deuxième alerte (étape 208) est déclenchée et indique que le complexe est complet (étape 104), ce qui enclenche l'étape de décision 105 et en fonction de la décision, soit l'étape 106 de clôture du procédé de préparation du support soit l'étape 100 d'initialisation.

Dans le premier mode de réalisation (figure 1) et le deuxième mode de réalisation (figure 2), l'étape d'acquisition d'image(s) (étape 201) est réalisée de manière ponctuelle mais dans le premier mode de réalisation, on l'effectue une fois le complexe déposé tandis que dans le deuxième mode de réalisation, on l'effectue après chaque étape de dépôt constituant le complexe. Le deuxième mode de réalisation est plus avantageux car il permet de rectifier plus facilement les erreurs.

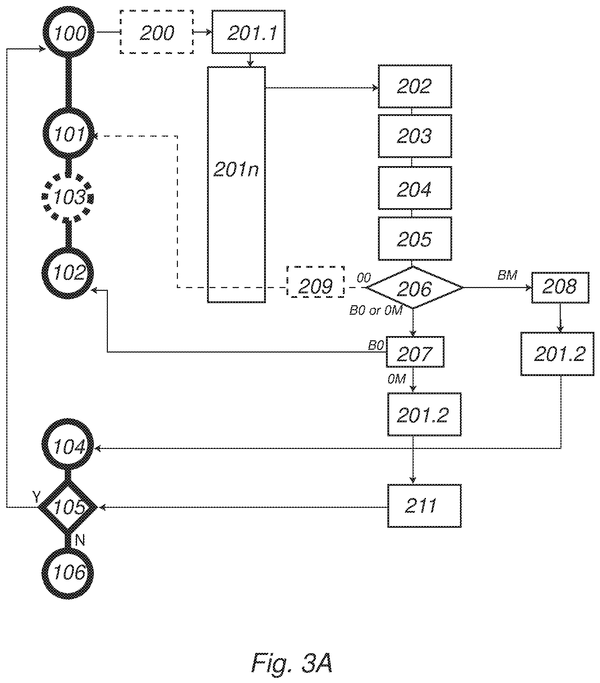

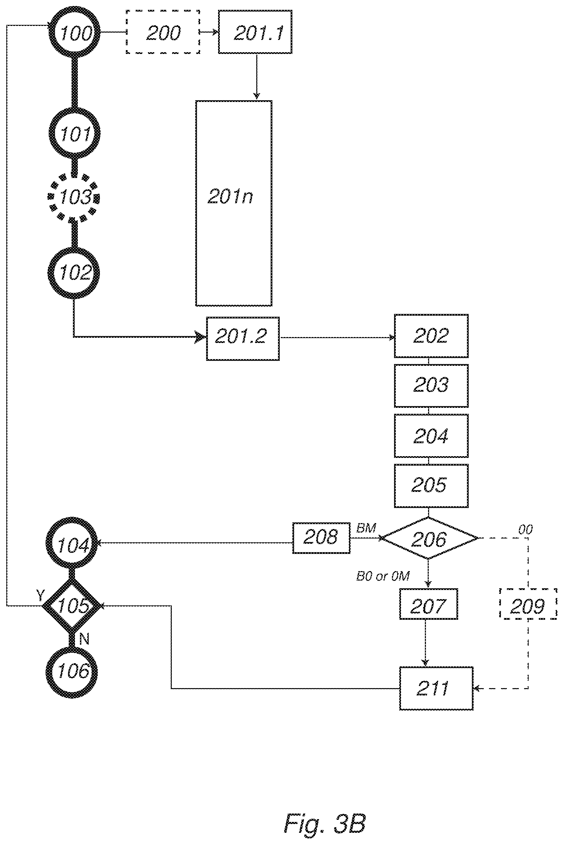

Dans un troisième mode de réalisation illustré en figure 3, le procédé de détermination est déclenché dès l'étape d'initialisation 100 du procédé de préparation du support. L'étape d'acquisition d'au moins une image (étape 201) est réalisée en continu au cours des étapes de dépôt de l'échantillon (101), de dépôt de l'acide formique (103) le cas échéant, de dépôt de la matrice (102). Le début d'acquisition est illustré par l'étape 201.1, l'étape 201n représente la pluralité d'acquisition d'images au cours des étapes 101, 102, 103. Après chaque acquisition d'image (201n), les étapes 202 à 206 sont réalisées : si le complexe présente un état d'intégrité correspondant au troisième état d'intégrité (BM) alors l'étape d'acquisition (201n) s'arrête (étape 201.2), le complexe est considéré par l'unité d'analyse comme complet (étape 104) et l'étape 105 est mise en œuvre.

Si le complexe présente un état d'intégrité correspondant au premier (B0) ou deuxième état d'intégrité (0M) alors la première alerte est déclenchée (étape 207) ou si optionnellement, il s'agit d'un quatrième état d'intégrité (00) alors la troisième alerte est déclenchée (étape 209), alors : dans un premier cas, l'opérateur décide d'isoler la zone de réception défaillante (étape 211), l'acquisition d'image (201n) s'arrête (étape 201.2) et l'étape 105 est mise en œuvre ; dans un deuxième cas, l'opérateur décide de corriger l'erreur dans le cas d'un premier état d'intégrité déterminé (B0) et l'acquisition d'image continue (étape 201n) et les étapes 202 à 206 du procédé de détermination se poursuivent et l'étape 102 du procédé de préparation de support est de nouveau réalisée.

En variante de ce troisième mode de réalisation, comme illustré en figure 3B, après l'étape de dépôt de la matrice (étape 102), l'acquisition d'images (201n) est arrêtée (étape 201.2) et l'unité d'analyse met en œuvre les étapes 202 à 206 : si le complexe présente un état d'intégrité correspondant au troisième état d'intégrité (BM) alors le complexe est considéré par l'unité d'analyse comme complet (étape 104) et l'étape 105 est mise en œuvre ; dans tous les autres cas (états d'intégrité 00, B0, 0M), l'opérateur décide d'isoler la zone de réception défaillante (étape 211), et l'étape 105 est mise en œuvre et en fonction de la décision, soit l'étape 106 de clôture du procédé de préparation du support soit l'étape 100 d'initialisation.

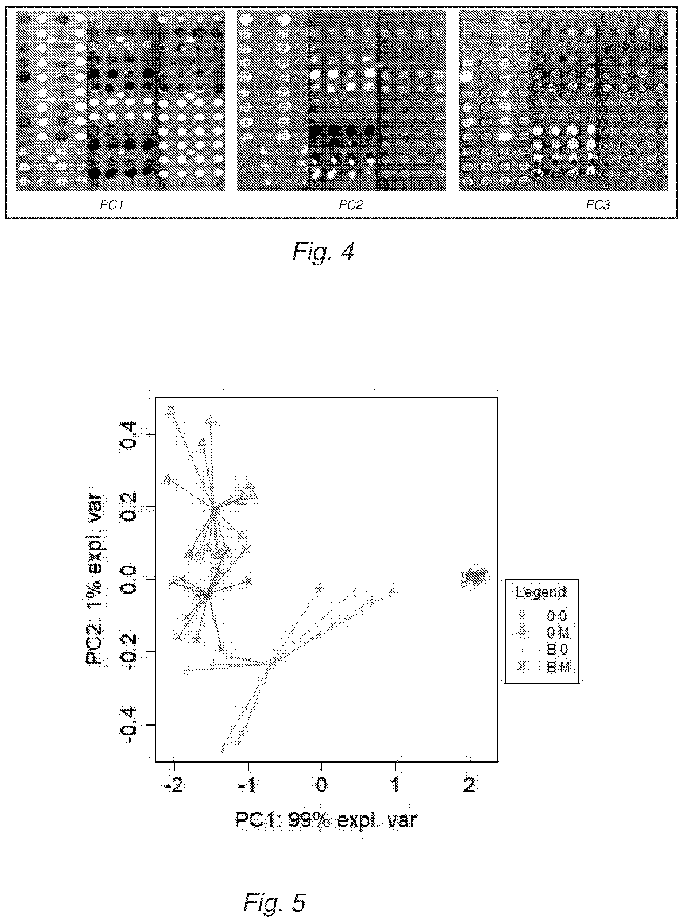

Nous avons illustré un mode de réalisation de l'invention avec un exemple représenté aux figures 4 et 5. Cet exemple est bien entendu non limitatif et permet de mieux comprendre l'approche revendiquée. Dans cet exemple, on a utilisé trois canaux spectraux R, G, B. En figure 4 est illustrée une série d'images de trois supports présentant des dépôts de complexes différents. La première image des trois supports est une image selon le premier canal R (PC1), la deuxième image des trois supports est une image selon le deuxième canal G (PC2) et la troisième image des trois supports est une image selon le troisième canal B (PC3). Les images sont en noir et blanc. Par la suite, les différents complexes sont identifiés par des points dont les coordonnées (PC1 ; PC2 ; PC3) correspondent à leur valeur d'intensité lumineuse en fonction des longueurs d'onde choisies (RGB). Après analyse par composante principale, comme illustré en figure 5, l'unité d'analyse du système regroupe par similarité les différents points pour en établir des « groupes » d'états d'intégrité, la différenciation des états d'intégrité étant plus flagrante dans ce mode. Il est à noter toutefois que l'analyse par composante principale n'est pas obligatoire. Comme on peut le voir en figure 5, les zones de réception vide (absence de complexe équivalant au quatrième état d'intégrité 00) se détachent du lot et sont représentés par des petits ronds, les complexes présentant un état d'intégrité équivalent au premier état d'intégrité B0 sont représentés par des '+', les complexes présentant un état d'intégrité équivalent au deuxième état d'intégrité 0M sont représentés par des triangles, les complexes présentant un état d'intégrité équivalent au deuxième état d'intégrité 0M sont représentés par des croix 'x'.

En figure 6 est illustrée une représentation graphique de valeurs d'intensité lumineuse d'un complexe en fonction du temps selon une longueur d'onde déterminée. Sur ce graphique, le premier pic correspond au passage de la pointe de l'outil de dépôt sous l'imageur pour déposer un échantillon. La différence d'intensité lumineuse après ce premier pic est faible. Le deuxième pic correspond au passage d'une main sous l'imageur pour déposer la matrice. Le signal atteint ensuite son maximum après séchage de la matrice qui blanchit en cristallisant.

Bien entendu, l'invention n'est pas limitée aux modes de réalisation décrits et représentés aux figures annexées. Des modifications restent possibles, notamment du point de vue de la constitution des divers éléments ou par substitution d'équivalents techniques, sans sortir pour autant du domaine de protection de l'invention telle que définie par les revendications annexées.

**Revendications**

1. Procédé de détermination de l'intégrité d'au moins un complexe à base d'au moins un échantillon biologique et d'au moins une matrice, ledit complexe étant agencé dans au moins une zone de réception (11) d'un support (10) destinée à être analysée ultérieurement, ledit procédé étant mis en œuvre par un système de détermination (1) comprenant au moins un imageur (20), une unité d'analyse (30) configurée pour coopérer avec l'imageur (20) dans lequel ledit procédé comprend au moins les étapes suivantes :

   - (201, 201n) acquisition d'au moins une image d'au moins une zone de réception (11) du support (10), l'acquisition étant réalisée par l'imageur (20) du système de détermination (1),
   - (202) envoi de l'au moins une image acquise par l'imageur (20) vers l'unité d'analyse (30),
   - (203) analyse de l'image envoyée en extrayant des valeurs d'intensité lumineuse représentatives d'au moins une bande spectrale, l'analyse étant réalisée par l'unité d'analyse (30),
   - (204) mise en relation des valeurs d'intensité lumineuse entre elles pour obtenir des données spectrales représentatives, et obtention desdites données spectrales représentatives, **caractérisé en ce que** ledit procédé comprend en outre les étapes suivantes :
   - (206) détermination par l'unité d'analyse (30) d'un état d'intégrité du complexe par la comparaison (205) par regroupement de similarité avec un seuil de similarité déterminé de chacune des données spectrales représentatives obtenues à l'étape de « mise en relation » avec des données spectrales de référence contenues dans l'unité d'analyse (30) et identifiées pour chaque état d'intégrité parmi au moins :

      (i) un premier état d'intégrité (B0) correspondant à la présence d'un dépôt d'échantillon combiné à l'absence de dépôt de matrice,
      (ii) un deuxième état d'intégrité (0M) correspondant à la présence d'un dépôt de matrice combiné à l'absence de dépôt d'échantillon,
      (iii) un troisième état d'intégrité (BM) correspondant à la présence d'un dépôt d'échantillon combiné à la présence d'un dépôt de matrice,

   - (207) déclenchement d'au moins une première alerte, par l'unité d'analyse (30), lorsque les données représentatives s'apparentent au premier état d'intégrité (B0) ou au deuxième état d'intégrité (0M).

2. Procédé de détermination selon la revendication 1, dans lequel les valeurs d'intensité lumineuses représentatives sont représentatives d'au moins deux bandes spectrales différentes et de préférentiellement au moins trois bandes spectrales différentes.

3. Procédé de détermination selon l'une quelconque des revendications 1 ou 2, dans lequel en étape d'acquisition, l'imageur (20) acquiert au moins une pluralité d'images de la même zone de réception (11) du support (10), l'acquisition des images étant réalisée à des instants déterminés différents ou sur au moins une période de temps déterminée.

4. Procédé de détermination selon l'une quelconque des revendications 1 à 3, dans lequel l'imageur (20) est un imageur RGB ou un imageur multi-spectral ou un imageur hyperspectral.

5. Procédé de détermination selon l'une quelconque des revendications 1 à 4, dans lequel la liste comprenant les états d'intégrité comprend au moins un quatrième état d'intégrité (00) correspondant à l'absence de dépôt d'échantillon combiné à l'absence de dépôt de matrice.

6. Procédé de détermination selon l'une quelconque des revendications 1 à 5, comprenant une étape de calibration (200) préalable à l'étape d'acquisition du procédé, l'étape de calibration (200) consistant en l'acquisition d'une image, dite image de référence, d'au moins une zone de réception (11) vide et en l'enregistrement de ladite image de référence dans l'unité d'analyse (30).

7. Procédé de préparation d'un support (10) d'échantillons à des fins d'analyses par exemple par spectromètre de masse, de manière à détecter la nature du/des microorganismes présents dans le ou les échantillons déposés sur le support, le procédé de préparation comprenant au moins les étapes suivantes :

- (101) dépôt d'un échantillon dans au moins une zone de réception (11) du support (10)
- (102) dépôt d'une matrice dans l'au moins une zone de réception (11) du support (10) dans laquelle le dépôt d'échantillon est réalisé,

le procédé de préparation étant **caractérisé en ce qu'**il intègre un procédé de détermination d'intégrité du complexe, selon l'une quelconque des revendications 1 à 6.

8. Procédé de préparation selon la revendication 7, dans lequel l'étape (201) d'acquisition d'au moins une image du procédé de détermination est réalisée après l'étape (102) de dépôt de matrice.

9. Procédé de préparation selon la revendication 7, dans lequel l'étape (201) d'acquisition d'au moins une image du procédé de détermination est réalisée après l'étape (101) de dépôt d'échantillon et après l'étape (102) de dépôt de matrice.

10. Procédé de préparation selon la revendication 7, dans lequel l'étape (201n) d'acquisition d'au moins une image du procédé de détermination est déclenchée (201.1) avant l'étape (101) de dépôt de l'échantillon et est arrêtée (201.2) après l'étape de dépôt de matrice, l'étape d'acquisition étant réalisée en continu durant les étapes du procédé de préparation.

11. Système (1) configuré pour mettre en œuvre le procédé de détermination selon l'une quelconque des revendications 1 à 6, comprenant au moins un imageur (20), une unité d'analyse (30) et au moins un dispositif d'affichage (40) configuré pour afficher la ou les alertes.

12. Système selon la revendication 11, dans lequel le dispositif d'affichage (40) est configuré pour afficher une représentation graphique du support (10) illustrant l'au moins une zone de réception (11) du support (10) et de préférence toutes les zones de réception (11) du support (10).

13. Système selon la revendication 12, comprenant un dispositif de guidage coopérant avec le dispositif d'affichage (40), le dispositif de guidage (31) étant intégré dans l'unité d'analyse (30), le dispositif de guidage (31) étant configuré pour indiquer la ou les zones de réception (11) destinées au dépôt d'un échantillon et/ou d'un dépôt de matrice.

**Patentansprüche**

1. Verfahren zur Bestimmung der Integrität mindestens eines Komplexes auf Basis mindestens einer biologischen Probe und mindestens einer Matrix, wobei der Komplex in mindestens einem Aufnahmebereich (11) eines Trägers (10) angeordnet ist, der dazu bestimmt ist, später analysiert zu werden, wobei das Verfahren von einem Bestimmungssystem (1) durchgeführt wird, das mindestens einen Bildgeber (20), eine Analyseeinheit (30), die dazu ausgestaltet ist, mit dem Bildgeber (20) zusammenzuwirken, umfasst, wobei das Verfahren mindestens die folgenden Schritte umfasst:

- (201, 201n) Erfassen mindestens eines Bildes mindestens eines Aufnahmebereichs (11) des Trägers (10), wobei das Erfassen von dem Bildgeber (20) des Bestimmungssystems (1) ausgeführt wird,
- (202) Senden des mindestens einen von dem Bildgeber (20) erfassten Bildes zu der Analyseeinheit (30),
- (203) Analysieren des gesandten Bildes, indem Lichtintensitätswerte extrahiert werden, die für mindestens ein Spektralband repräsentativ sind, wobei das Analysieren von der Analyseeinheit (30) ausgeführt wird,
- (204) Inverbindungbringen der Lichtintensitätswerte untereinander, um repräsentative Spektraldaten zu erhalten, und Erhalten der repräsentativen Spektraldaten,

**dadurch gekennzeichnet dass** das Verfahren mindestens die folgenden Schritte umfasst :

- (206) Bestimmen durch die Analyseeinheit (30) eines Integritätszustand des Komplexes durch das Vergleichen (205), durch Gruppenzuordnung nach Ähnlichkeit mit einem bestimmten Ähnlichkeitsschwellenwert, jeder der im Schritt des "Inverbindungbringens" erhaltenen repräsentativen Spektraldaten mit Referenzspektraldaten, die in der Analyseeinheit (30) enthalten sind und für jeden Integritätszustand identifiziert werden unter mindestens:

(i) einem ersten Integritätszustand (B0), der dem Vorhandensein eines Probenauftrags kombiniert mit dem Nichtvorhandensein eines Matrixauftrags entspricht,
(ii) einem zweiten Integritätszustand (0M), der dem Vorhandensein eines Matrixauftrags kombiniert mit dem Nichtvorhandensein eines Probenauftrags entspricht,
(iii) einem dritten Integritätszustand (BM), der dem Vorhandensein eines Probenauftrags kombiniert mit dem Vorhandensein eines Matrixauftrags entspricht,

- (207) Auslösen mindestens einer ersten Warnung durch die Analyseeinheit (30), wenn die repräsentativen Daten dem ersten Integritätszustand (B0) oder dem zweiten Integritätszustand (0M) gleichen.

2. Verfahren zur Bestimmung nach Anspruch 1, wobei die repräsentativen Lichtintensitätswerte für mindestens zwei verschiedene Spektralbänder und bevorzugt mindestens drei verschiedene Spektralbänder repräsentativ sind.

3. Verfahren zur Bestimmung nach einem der Ansprüche 1 oder 2, wobei der Bildgeber (20) im Schritt des Erfassens mindestens eine Mehrzahl von Bildern desselben Aufnahmebereichs (11) des Trägers (10) erfasst, wobei das Erfassen der Bilder zu verschiedenen bestimmten Zeitpunkten oder über mindestens einen bestimmten Zeitraum erfolgt.

4. Verfahren zur Bestimmung nach einem der Ansprüche 1 bis 3, wobei der Bildgeber (20) ein RGB-Bildgeber oder ein multispektraler Bildgeber oder ein hyperspektraler Bildgeber ist.

5. Verfahren zur Bestimmung nach einem der Ansprüche 1 bis 4, wobei die Liste, welche die Integritätszustände umfasst, mindestens einen vierten Integritätszustand (00) umfasst, der dem Nichtvorhandensein eines Probenauftrags kombiniert mit dem Nichtvorhandensein eines Matrixauftrags entspricht.

6. Verfahren zur Bestimmung nach einem der Ansprüche 1 bis 5, umfassend einen Kalibrierungsschritt (200) vor dem Erfassungsschritt des Verfahrens, wobei der Kalibrierungsschritt (200) in dem Erfassen eines Bildes, Referenzbild genannt, mindestens eines leeren Aufnahmebereichs (11) und in dem Speichern des Referenzbildes in der Analyseeinheit (30) besteht.

7. Verfahren zur Präparation eines Trägers (10) für Proben zu Analysezwecken, zum Beispiel durch ein Massenspektrometer, so dass die Art des/der Mikroorganismen detektiert wird, die in der oder den auf den Träger aufgetragenen Proben vorhanden sind, wobei das Verfahren zur Präparation mindestens die folgenden Schritte umfasst:

- (101) Auftragen einer Probe in mindestens einem Aufnahmebereich (11) des Trägers (10)
- (102) Auftragen einer Matrix in dem mindestens einen Aufnahmebereich (11) des Trägers (10), in dem der Probenauftrag ausgeführt wird,

wobei das Verfahren zur Präparation **dadurch gekennzeichnet ist, dass** es ein Verfahren zur Bestimmung der Integrität des Komplexes nach einem der Ansprüche 1 bis 6 beinhaltet.

8. Verfahren zur Präparation nach Anspruch 7, wobei der Schritt (201) des Erfassens mindestens eines Bildes des Verfahrens zur Bestimmung nach dem Schritt (102) des Auftragens einer Matrix ausgeführt wird.

9. Verfahren zur Präparation nach Anspruch 7, wobei der Schritt (201) des Erfassens mindestens eines Bildes des Verfahrens zur Bestimmung nach dem Schritt (101) des Auftragens einer Probe und nach dem Schritt (102) des Auftragens einer Matrix erfolgt.

10. Verfahren zur Präparation nach Anspruch 7, wobei der Schritt (201n) des Erfassens mindestens eines Bildes des Verfahrens zur Bestimmung vor dem Schritt (101) des Auftragens einer Probe ausgelöst wird (201.1) und nach dem Schritt des Auftragens einer Matrix gestoppt wird (201.2), wobei der Schritt des Erfassens während der Schritte des Verfahrens zur Präparation kontinuierlich ausgeführt wird.

11. System (1), das dazu ausgestaltet ist, das Verfahren zur Bestimmung nach einem der Ansprüche 1 bis 6 durchzuführen, umfassend mindestens einen Bildgeber (20), eine Analyseeinheit (30) und mindestens eine Anzeigevorrichtung (40), die dazu ausgestaltet ist, die Warnung oder Warnungen anzuzeigen.

12. System nach Anspruch 11, wobei die Anzeigevorrichtung (40) dazu ausgestaltet ist, eine grafische Darstellung des Trägers (10) anzuzeigen, die mindestens einen Aufnahmebereich (11) des Trägers (10) und bevorzugt alle Aufnahmebereiche (11) des Trägers (10) zeigt.

13. System nach Anspruch 12, umfassend eine Führungsvorrichtung, die mit der Anzeigevorrichtung (40) zusammenwirkt, wobei die Führungsvorrichtung (31) in die Analyseeinheit (30) integriert ist, wobei die Führungsvorrichtung (31) dazu ausgestaltet ist, den oder die Aufnahmebereiche (11) anzugeben, die zum Auftragen einer Probe und/oder eines Matrixauftrags bestimmt sind.

**Claims**

1. Method for determining the integrity of at least one complex based on at least one biological sample and at least one matrix, said complex being arranged in at least one receiving area (11) of a support (10) to be analysed subsequently, said method being implemented by a determination system (1) comprising at least one imager (20) and an analysis unit (30) configured for interacting with the imager (20), wherein said method comprises at least the following steps:

   - (201, 201n) acquiring at least one image of at least one receiving area (11) of the support (10), the acquisition being executed by the imager (20) of the determination system (1),
   - (202) sending the at least one image acquired by the imager (20) to the analysis unit (30),
   - (203) analyzing the sent image by extracting the light intensity values representative of at least one spectral band, the analysis being executed by the analysis unit (30),
   - (204) relating the light intensity values to each other to obtain representative spectral data, and obtaining said representative spectral data,

   wherein

   - (206) determining, by the analysis unit (30), a state of integrity of the complex, by comparing (205), by similarity grouping with a specified similarity threshold, each of the representative spectral data obtained in the "relating" step with reference spectral data contained in the analysis unit (30) and identified for each state of integrity from among at least the following:

      (i) a first state of integrity (B0) corresponding to the presence of a sample deposit combined with the absence of a matrix deposit,
      (ii) a second state of integrity (0M) corresponding to the presence of a matrix deposit combined with the absence of a sample deposit,
      (iii) a third state of integrity (BM) corresponding to the presence of a sample deposit combined with the presence of a matrix deposit,

   - (207) triggering at least a first alert, by the analysis unit (30), when the representative data resemble the first state of integrity (B0) or the second state of integrity (0M).

2. Determination method according to Claim **1,** wherein the representative values of light intensity are representative of at least two different spectral bands and preferably at least three different spectral bands.

3. Determination method according to either of Claims 1 and 2, wherein, in the acquisition step, the imager (20) acquires at least one plurality of images of the same receiving area (11) of the support (10), the acquisition of the images being executed at different specified instants or during at least one specified period of time.

4. Determination method according to any of Claims 1 to 3, wherein the imager (20) is an RGB imager or a multi-spectral imager or a hyperspectral imager.

5. Determination method according to any of Claims 1 **to 4,** wherein the list comprising the states of integrity comprises at least a fourth state of integrity (00) corresponding to the absence of a sample deposit combined with the absence of a matrix deposit.

6. Determination method according to any of Claims 1 to 5, comprising a calibration step (200) before the acquisition step of the method, the calibration step (200) consisting in the acquisition of an image, called the reference image, of at least one empty receiving area (11) and in the recording of said reference image in the analysis unit (30).

7. Method for preparing a sample support (10) for purposes of analysis, by mass spectrometer for example, in order to detect the nature of the microorganism(s) present in the sample(s) deposited on the support, the preparation method comprising at least the following steps:

   - (101) depositing a sample in at least one receiving area (11) of the support (10),
   - (102) depositing a matrix in the at least one receiving area (11) of the support (10) in which the sample has been deposited,

   the preparation method being **characterized in that** in incorporates a method for determining the integrity of the complex according to any of Claims 1 to 6.

8. Preparation method according to Claim 7, wherein the step (201) of acquiring at least one image of the determination method is executed after the step (102) of depositing the matrix.

9. Preparation method according to Claim 7, wherein the step (201) of acquiring at least one image of the determination method is executed after the step (101) of depositing the sample and after the step (102) of depositing the matrix.

10. Preparation method according to Claim 7, wherein the step (201n) of acquiring at least one image of the determination method is triggered (201.1) before the step (101) of depositing the sample and is stopped (201.2) after the step of depositing the matrix, the acquisition step being executed continuously during the steps of the preparation method.

11. System (1) configured for implementing the determination method according to any of Claims 1 to 6, comprising at least one imager (20), an analysis unit (30) and at least one display device (40) configured for displaying the alert(s).

12. System according to Claim 11, wherein the display device (40) is configured for displaying a graphic representation of the support (10), illustrating the at least one receiving area (11) of the support (10), and preferably all the receiving areas (11) of the support (10).

13. System according to Claim 12, comprising a guidance device interacting with the display device (40), the guidance device (31) being integrated into the analysis unit (30), the guidance device (31) being configured for indicating the receiving area(s) (11) designated for the deposition of a sample and/or a matrix deposit.

Fig. 1

Fig. 2

Fig. 3A

Fig. 3B

*Fig. 4*

*Fig. 5*

*Fig. 6*

*Fig. 7*

Fig. 8

Fig. 9

Fig. 10

**RÉFÉRENCES CITÉES DANS LA DESCRIPTION**

**Documents brevets cités dans la description**

- US 7145135 B1

- US 2013302847 A1